# EUROPEAN PATENT APPLICATION

(11) **EP 4 714 585 A1**
(43) Date of publication of application: **25.03.2026**
(21) Application number: 24383015.5
(22) Date of filing: 23.09.2024
(51) Int. Cl.: B23K 31/02, B23K 37/02, B23K 37/04, B25J 15/00, B25J 15/10

(54) **ROBOT END EFFECTOR, INDUSTRIAL ROBOT, AND METHOD FOR GRIPPING AND WELDING AN ELONGATED WORKPIECE USING A ROBOT END EFFECTOR**

(71) Applicant: Navantia, S.A., SME, 28006 Madrid (ES)
(72) Inventor: SANTIAGO PENÍN, Antonio Luis, 15590 A CABANA (ES); LAMAS RODRÍGUEZ, Adolfo, 15570 NARÓN (ES); HERRERO MARTÍN, Carla, 28042 MADRID (ES)
(74) Representative: ZBM Patents - Zea, Barlocci & Markvardsen

(57) **Abstract**

The present applicant relates to, in a first aspect, a robot end effector (120). The robot end effector (120) comprises an end effector distal end (121) and an end effector proximal end (122), a welding tool (150), a slot (130) configured to receive an elongated workpiece, and a gripping mechanism (140) configured to grip the elongated workpiece. In a further aspect, a method for gripping and welding an elongated workpiece using a robot end effector (120), is also provided. The method comprises gripping the elongated workpiece, aligning the longitudinal axis of the elongated workpiece with a predetermined reference axis of the robot end effector, and welding the elongated workpiece with a panel.

## Description

The present disclosure relates to robot end effectors, industrial robots, and methods for gripping and welding elongated workpieces.

### BACKGROUND

Industrial robots are used to perform a wide variety of tasks in industries. The use of these industrial robots can increase productivity, efficiency, and the quality of manufactured products. The use of industrial robots has also reduced the exposure of workers to potentially hazardous chemicals or operations involving significant physical efforts. This improves safety in the manufacturing environment.

There are industrial robots configured for different tasks such as painting, gripping, carrying, welding, etc. For each of those tasks a specific robot end effector can be attached to the robot manipulator. Therefore, several robot manipulators may be used to perform different tasks on a workpiece at a working cell.

The use of industrial robots in the manufacturing processes may involve preparations such as programming, calculating optimal robot paths, and planning collision-free paths. These operations may be even more complex when the number of robots increases.

Furthermore, the collision-free paths may prevent robots from performing tasks while other robots are working. This may increase the cycle time.

The present disclosure provides examples of robot end effectors, industrial robots, and methods that at least partially resolve some of the aforementioned disadvantages.

### SUMMARY

In a first aspect, a robot end effector is disclosed. The end effector comprises an end effector distal end and an end effector proximal end at opposite sides along a longitudinal axis of the robot end effector. The end effector further comprises a welding tool configured to move about the longitudinal axis of the robot end effector. Moreover, the end effector comprises a slot configured to receive at least a portion of an elongated workpiece. The slot is defined along the longitudinal axis of the robot end effector. The robot end effector comprises a workpiece support for supporting the portion of the elongated workpiece, wherein the workpiece support is arranged within the slot. The robot end effector also comprises a gripping mechanism configured to grip the elongated workpiece. The gripping mechanism comprises a first finger opposite to a second finger, wherein the first finger and the second finger are arranged at both sides of the longitudinal axis of the robot end effector to hold the elongated workpiece. The gripping mechanism comprises a third finger arranged between the end effector proximal end and the first and second fingers, wherein the third finger is configured to push the portion of the elongated workpiece against the workpiece support.

According to this aspect, a robot end effector able to grip and weld an elongated workpiece is provided. Therefore, a single robot may be enough to perform at least two different tasks that are usually performed at least by two different robots, e.g. gripping and welding.

By using the robot end effector according to this aspect, the elongated workpiece may be grasped and positioned while the welding is performed. Therefore, tack welding for provisional fixation of the workpiece may be avoided.

Furthermore, the longitudinal axis of the elongated workpiece may be substantially aligned with a predetermined reference axis of the robot end effector. This may allow to accurately manipulate the elongated workpiece relative to the robot end effector and placing the elongated workpiece precisely for welding.

Moreover, as a single robot is used, tasks related to trajectory optimization and collision avoidance may be simplified or even avoided. This may mean spending less time to configure the industrial robots and increasing the speed of the configuration procedure.

Furthermore, as a single robot can be used for gripping and welding instead of at least two robots, the second robot can be used for performing another task. This may involve enhancing the resources of the manufacturing site.

Therefore, cycle time, available manufacture resources, and energy consumption may be optimized.

The above features can be applied to a wide variety of manufacturing environments, e.g. shipbuilding. Shipyards are characterized by dangerous work at heights, welding on hull, outdoor work, etc. In other words, minimizing on-site human intervention, reducing on-hull operations preparation, reducing the number of robots to fit the confined space, and reducing cycle time may be significantly useful in the shipyard environment.

In a further aspect, an industrial robot is disclosed. The industrial robot comprises a manipulator to releasably attach the robot end effector according to any of the examples described herein. The industrial robot further comprises a control unit configured to control the operation of the industrial robot, and an end effector driving system configured to move the robot end effector about the longitudinal axis of the robot end effector. Furthermore, the industrial robot comprises a distance sensor configured to sense distance between the elongated workpiece and a panel at positions about the longitudinal axis of the robot end effector. The distance sensor is in data communication with the control unit which is configured to determine a perpendicularity indicator of the longitudinal axis of the elongated workpiece relative to the panel, the perpendicularity indicator being obtained based on received distance measurements.

Advantages derived from this aspect may be similar to those mentioned regarding the first aspect.

Furthermore, the elongated workpiece may be easily positioned substantially upright or perpendicular relative to the panel or the like. By using the present industrial robot, the elongated workpiece can be accurately positioned and welded on the panel.

In yet a further aspect, a method for gripping and welding an elongated workpiece is disclosed. The method can be implemented using a robot end effector comprising a gripping mechanism and a welding tool. The method comprises gripping or holding the elongated workpiece at least at two opposite gripping regions respectively positioned at each side of the longitudinal axis of the robot end effector; aligning the longitudinal axis of the elongated workpiece with a predetermined reference axis of the robot end effector; and welding the elongated workpiece with a panel by moving the welding tool about the longitudinal axis of the end effector.

Advantages derived from this aspect may be similar to those mentioned regarding the first aspect.

Throughout the present disclosure, the terms "industrial robot", "robot", and "robot system" are used interchangeably.

Throughout the present disclosure, the expression "industrial robot" may refer to a robot used in a manufacturing environment.

Throughout the present disclosure, the term panel may mean a surface, support, or the like to be welded with the elongated workpiece.

Throughout the present disclosure, the terms "finger" and "jaw" can be used interchangeably.

### DESCRIPTION OF THE DRAWINGS

Non-limiting examples of the present disclosure will be described in the following, with reference to the appended drawings, in which:
Figure 1 schematically illustrates a robot end effector according to one example of the present disclosure;
Figure 2 schematically illustrates an industrial robot including the robot end effector of Figure 1 according to one example of the present disclosure;
Figure 3 schematically illustrates an elevational view of a robot end effector according to one example of the present disclosure;
Figure 4 schematically illustrates a perspective view of the robot end effector of Figure 3;
Figure 5 schematically illustrates a perspective view of a robot end effector without elongated workpiece according to one example of the present disclosure;
Figure 6 schematically illustrates a robot end effector gripping an elongated workpiece to be welded with a panel according to one example of the present disclosure;
Figure 7 schematically illustrates a partial and perspective view of an industrial robot gripping an elongated workpiece to be welded with a panel according to one example of the present disclosure;
Figure 8A schematically illustrates a partial view of the elongated workpiece and the robot end effector in a misaligned position;
Figure 8B schematically illustrates the elongated workpiece and the robot end effector of Figure 8A in an aligned position;
Figure 9 schematically illustrates a view of a control unit of an industrial robot according to one example of the present disclosure;
Figures 10A - 10B schematically illustrate respective examples of elongated workpieces; and
Figure 11 is a block diagram of a method for operating the industrial robot according to an example of the present disclosure.

### DETAILED DESCRIPTION OF EXAMPLES

In these figures, the same reference signs have been used to designate matching elements.

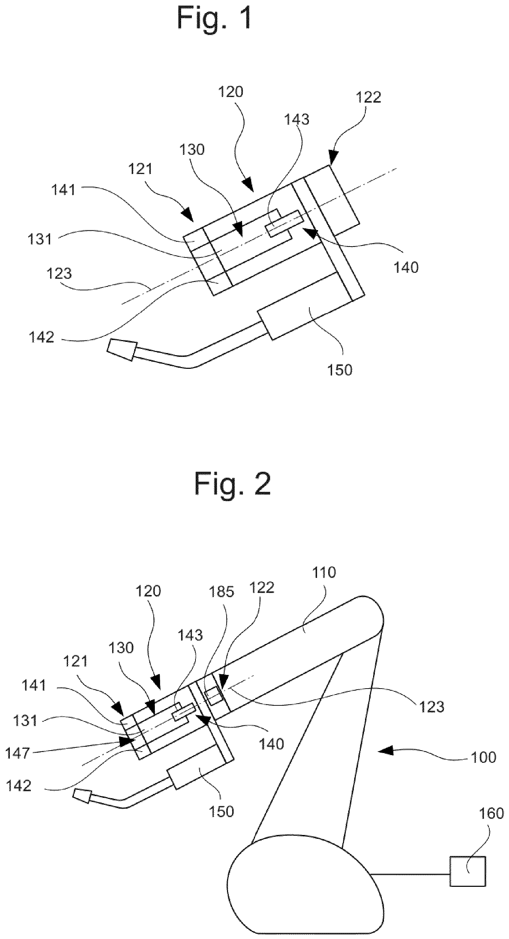

Figure 1 schematically illustrates a robot end effector 120 according to one example of the present disclosure. The robot end effector 120 may be releasably attached to a manipulator 110 of an industrial robot 100 as shown in Figure 2. The industrial robot 100 of Figure 2 comprises the manipulator 110 and the robot end effector 120. The manipulator 110 may comprise any suitable degree-of-freedom configuration, for instance a six-degree-of-freedom. However, the number of degrees of freedom may vary depending on the case.

As shown in Figures 1 and 2, the robot end effector 120 comprises an end effector distal end 121 and an end effector proximal end 122 at opposite sides along the longitudinal axis 123 of the robot end effector. The expressions proximal end or distal end refer to the proximity to the manipulator. The end effector proximal end 122 is closer to the manipulator than the end effector distal end 121 in the longitudinal axis 123. The robot end effector 120 is attached to the manipulator 110 at the end effector proximal end 122.

The robot end effector 120 comprises a generally elongated configuration, for instance a generally cylindrical shape. However, other elongated shapes can be envisaged such as prism-shapes.

The end effector 120 comprises a welding tool 150 configured to be moved about the longitudinal axis 123 of the robot end effector. The welding tool 150 may be orbitally attached to the rest of the end effector 120. The movement of the welding tool 150 relative to the longitudinal axis 123 may be chosen depending on the general shape of the weld path to be performed. For instance, a square weld path may cause the welding tool 150 to be moved following a squared path, or a circular weld path may cause the welding tool to be moved following a circular path. Details about the welding tool are provided herein.

As can be seen in the example of Figure 1, the robot end effector 120 comprises a slot 130 configured to receive at least a portion of an elongated workpiece. The slot 130 is defined or arranged substantially along the longitudinal axis 123 of the robot end effector. The slot comprises a generally elongated configuration. The size and shape of the slot may be defined depending on the shape and/or size of the elongated workpiece to be manipulated.

The robot end effector 120 also comprises a workpiece support 131 for supporting the portion of the elongated workpiece. The workpiece support 131 is arranged within the slot 130. The workpiece support 131 may be configured as the bottom of the slot. Therefore, the side of the robot end effector 120 including the slot 130 may be open while the side of the robot end effector 120 including the workpiece support 131 may be closed.

Furthermore, the robot end effector 120 comprises a gripping mechanism 140 to grip the elongated workpiece. The gripping mechanism 140 may allow reliable and accurate manipulation and clamping of the elongated workpiece in a manufacturing process.

The gripping mechanism 140 of Figure 1 comprises a first finger 141 opposite to a second finger 142, and a third finger 143. The fingers may be driven through a pneumatic drive system. The first finger 141 and the second finger 142 are arranged opposed at both sides of the longitudinal axis 123 of the end effector. In the attached figures, the first finger 141 and the second finger 142 are arranged at the end effector distal end 121. The first finger 141 and the second finger 142 may cooperate with each other to grasp the elongated workpiece between them. The elongated workpiece can be held sideways by the first finger 141 and the second finger 142.

The third finger 143 is arranged between the end effector proximal end and the pair of opposite first and second fingers 141, 142. The third finger is configured to push at least the workpiece against the workpiece support 131. The third finger 143 may be configured to be aligned with the length of the slot 130 in a gripping condition. A gripping condition may refer to the condition in which the robot end effector grips an elongated workpiece. In fact, ta tip of the third finger 143 may be able to be longitudinally introduced in the slot 130. The shape and size of the third finger 143 can be chosen to match at least a portion of the elongated workpiece 200.

In some non-illustrated examples, the third finger 143 may be positioned substantially misaligned with respect to the length of the slot 130. The third finger 143 could be positioned sideways to the length of the slot 130.

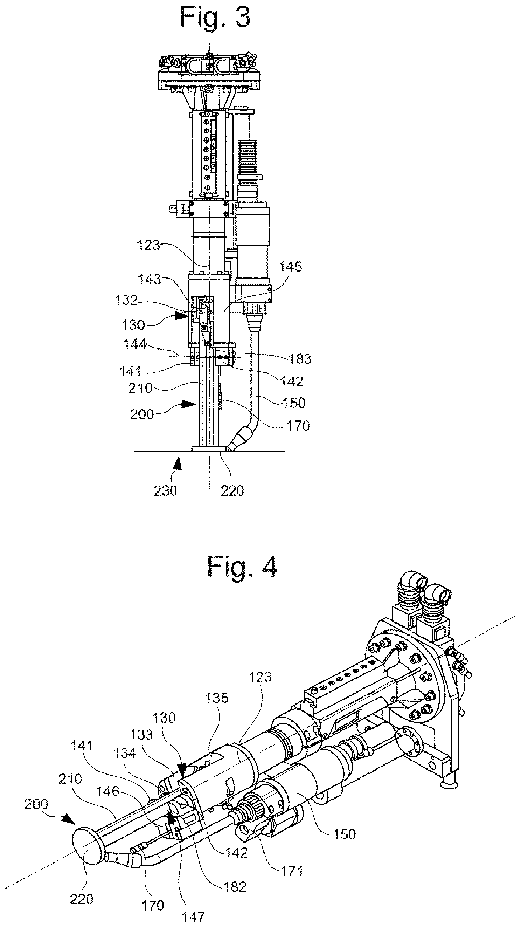

Figure 3 schematically illustrates an elevational view of a robot end effector 120 according to one example; and Figure 4 schematically illustrates a perspective view of the end effector of Figure 3. An elongated workpiece 200 has been illustrated in the Figures 3 and 4.

The slot 130 may be formed in the body of the robot end effector 120. The slot 130 may have a main opening 132 on the outline of the body of the end effector 120. The slot 130 may also have a side opening 133 located substantially at the end effector distal end 121 to allow the at least one portion of the elongated workpiece to be received. The elongated workpiece may pass through the side opening 133. In the attached figures, the longitudinal axis 123 of the end effector is substantially parallel to the length of the slot 130. The length of the slot may be aligned with the longitudinal axis 123 of the end effector. The workpiece support 131 is accessible and can be seen through the main opening and the side opening of the slot 130. At least a portion of the elongated workpiece may reach the workpiece support 131 in the gripping condition .

The gripping mechanism 140 may comprise a base 146, the first finger 141, and the second finger 142. The base 146 may act as a link between the first finger 141 and the second finger 142. The first finger 141 and the second finger 142 can be moved relative to each other on the base 146. The base 146 may comprise a guide rail where the fist finger 141 and the second finger 142 may slidably move such as parallel jaws. In some examples, the first finger 141 and the second finger 142 may be pivotally connected or articulated to the base 146. The first finger 141 and the second finger 142 may move relatively to each other in such a way that an open position and/or a closed position can be defined. The closed position may refer to a condition in which the first finger 141 and the second finger 142 are substantially in contact with each other. The open position may refer to a condition in which the first finger 141 and the second finger 142 are substantially separated from each other. In the open position the base 146, the first finger 141, and the second finger 142 may be arranged so that a U-shaped configuration can be formed. Figures 1-4 illustrate examples in which the first and the second finger 141, 142 are in an open position.

In the closed position there may be a contact between both first and second fingers 141, 142 while in the open position there may be a gap between the first finger 141 and the second finger 142. The gap or clamping region 147 may be defined between the base 146, the first finger 141, and the second finger 142. The first finger 141, the second finger 142, and the base 146 may be arranged so that the gap or clamping region 147 may substantially extend to the slot 130. Therefore, the gap or clamping region 147 may be a continuation of a receiving space or region defined by the slot along the longitudinal axis 123 of the robot end effector. The receiving space or region may allow the portion of the elongated workpiece to be received or housed.

The gap or clamping region 147 may be configured to receive the elongated workpiece widthwise. The clamping region 147 may be adjusted depending on the relative position of the first finger 141 and the second finger 142. This way, the gripping mechanism can be adapted to different sizes of the cross-section of elongated workpieces. Since the clamping region 147 may be a continuation of the slot 130, the portion of the elongated workpiece may be received by the slot 130 and the clamping region 147, as shown in Figures 3 and 4.

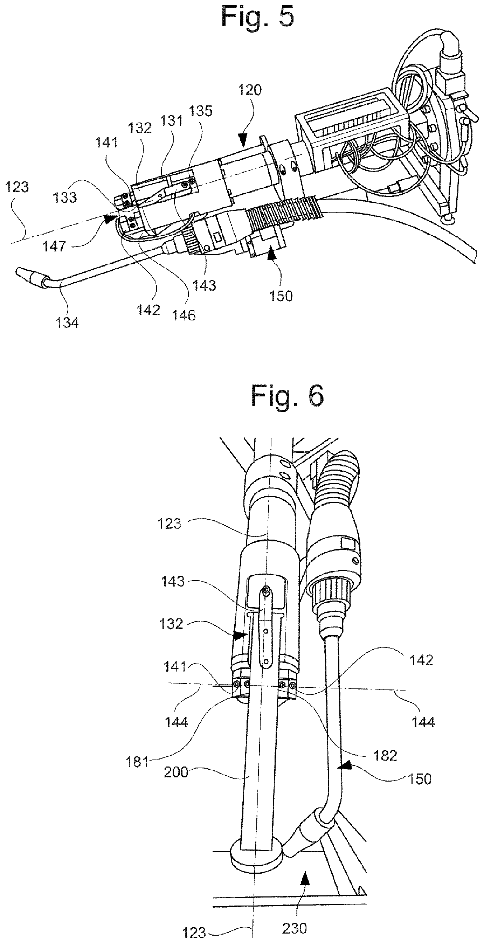

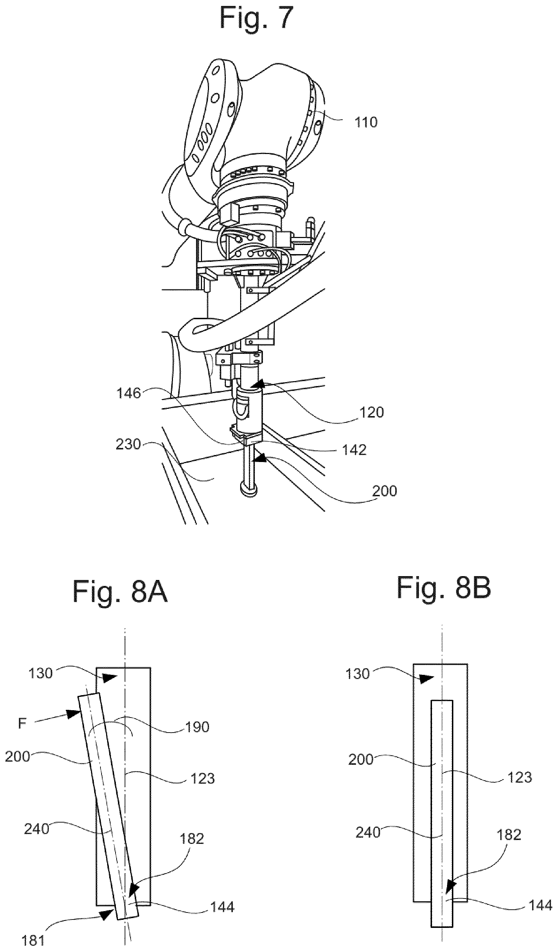

Figure 5 schematically illustrates a robot end effector without elongated workpiece according to one example of the present disclosure. Figure 6 schematically illustrates a robot end effector gripping an elongated workpiece to be welded with a panel according to one example. Figure 7 schematically illustrates a partial and perspective view of an industrial robot gripping an elongated workpiece 200 to be welded with a panel 230 according to one example.

In the examples of Figure 4 and 5, the slot 130 comprises a slot distal end 134 and a slot proximal end 135. The slot distal end 134 is closer to the end effector distal end 121 and the slot proximal end 135 is closer to the end effector proximal end 122. In those figures, the first finger 141 and the second finger 142 are arranged substantially adjacent to the slot distal end 134. The third finger 143 is arranged substantially at the slot proximal end 134.

Figures 8A and 8B schematically illustrate partial views of the elongated workpiece and the robot end effector respectively in a misaligned position and in an aligned position. When the elongated workpiece is gripped or held sideways by the first finger 141 and the second finger 142, as schematically represented in Figure 8A, the longitudinal axis 240 of the workpiece can be tilted relative to a predetermined reference axis such as the longitudinal axis 123 of the robot end effector 120. The longitudinal axis 240 of the workpiece may be tilted relative to the longitudinal axis of the robot end effector 120 about the workpiece rotation axis 144, so that an angle 190 can be defined between the longitudinal axis 240 of the elongated workpiece and the longitudinal axis 123 of the elongated workpiece 120. As shown in Figures 2 and 5, the workpiece rotation axis 144 can be defined from the first finger 141 to the second finger 142. The workpiece rotation axis 144 may be substantially perpendicular to the longitudinal axis 123 of the end effector 120. The workpiece rotation axis 144 is a geometric axis and can be defined even if the elongated workpiece 200 is not received in the slot 130.

In order to align the longitudinal axis 240 of the elongated workpiece 200 and the predetermined reference axis such as the longitudinal axis 123 of the elongated workpiece 120, a force F can be applied by the third finger to the elongated workpiece 200 received at least partially in the slot. The force applied by the third finger 143 may cause the elongated workpiece 200 to rotate about the workpiece rotation axis 144 towards the longitudinal axis 123 of the elongated workpiece 120. The elongated workpiece 200 may be gripped or held sideways by the first and the second fingers 141, 142 at a certain distance from the tip of the elongated workpiece 200. Two opposite side gripping regions 181, 182 can be respectively identified at each side of the longitudinal axis 123 of the robot end effector 120. Each of the two side gripping regions 181, 182 can be defined by the respective first and second fingers 141, 142. The first and the second fingers 141, 142 can exert a mutually opposed force on the sides of the elongated workpiece 200 substantially along the workpiece rotation axis 144 to provide the side gripping regions 181, 182. The first finger 141 and the second finger 142 may be movable along the workpiece rotation axis 144. The first finger 141 and the second finger 142 may be brought together to exert the opposed forced on the elongated workpiece 200.

The third finger 143 can be arranged in such a way that the elongated workpiece 200 can rotate about the workpiece rotation axis 144 when a force is exerted by the third finger 143 on the elongated workpiece at least partially placed in the slot towards the workpiece support. The third finger 143 is arranged between the end effector proximal end 122 and the first and second fingers 141, 142, in the lengthwise direction of the end effector 120, so when the third finger 143 exerts the force F on the elongated workpiece 200 the elongated workpiece can rotate about the workpiece rotation axis 144. As above mentioned, the third finger 143 can be placed aligned with or sideways to the longitudinal axis of the end effector 120 to apply the force to the elongated workpiece at a position between the slot proximal end 135 and the first and second fingers. Similarly to the two side gripping regions 181, 182 a frontal gripping region 183 can be defined by the third finger 143.

The rotation or movement of the elongated workpiece about the workpiece rotation axis 144 caused by the third finger 143 can force the workpiece against the workpiece support 131. When the elongated workpiece abuts the workpiece support, the rotation or movement of the elongated workpiece may end.

In the illustrated example, the third finger 143 is movable about a third finger rotation axis 145 substantially parallel to the workpiece rotation axis 144. The third finger rotation axis 145 is substantially perpendicular to the longitudinal axis 123 of the end effector 120. A movement of the third finger 143 about the third finger rotation axis 145 may allow the third finger 143 to be introduced inside the slot 130 and exert the force on the elongated workpiece 200.

The industrial robot 100 of figure 2 comprises a control unit 160 configured to control the operation of the industrial robot 100. Details of the control unit are provided herein.

The industrial robot may comprise an end effector driving system 185 configured to move the robot end effector 120 about the longitudinal axis 123 of the robot end effector. The operation of the end effector driving system 185 is controlled by the control unit 160. The industrial robot further comprises a distance sensor 170 configured to sense distances between the elongated workpiece 120 and a panel 230 at positions about the longitudinal axis 123 of the robot end effector. The distance sensor 170 is in data communication with the control unit so the control unit can receive distance data obtained from the plurality of locations about the longitudinal axis 123. The control unit 160 may be configured to determine a perpendicularity indicator of the longitudinal axis 240of the elongated workpiece 200 relative to the panel 230. The perpendicularity indicator can be obtained based on received distance measurements.

In some examples, the control unit 160 may be configured to determine the perpendicularity indicator by verifying whether the distance measurements satisfy a predetermined distance threshold. According to examples, the control unit may be configured to determine the perpendicularity indicator by verifying whether a difference between the highest value and the lowest value among the distance measurements satisfies a predetermined difference threshold.

The perpendicularity indicator may be related to the inclination of the longitudinal axis 240 of the elongated workpiece 200 relative to the panel 230. The inclination may be expressed in degrees. For instance, if the value of inclination is lower than a maximum inclination threshold then the perpendicularity indicator is positive. Otherwise, the control unit may determine through the perpendicularity indicator that the elongated workpiece is not arranged substantially perpendicular to the panel or surface.

The industrial robot 100 may further comprise a position sensor to determine the position of the elongated workpiece 200 relative to the longitudinal axis 123 of the end effector 120. The position of the elongated workpiece 200 may comprise the position of the longitudinal axis 123 of the elongated workpiece 200. The position sensor may be in data communication with the control unit 160. In some cases, the robot end effector 120 may be void of position sensor. The control unit may be configured to receive position data from the position sensor. The control unit may be also configured to determine the position of the longitudinal axis of the elongated workpiece and the longitudinal axis of the robot end effector and to command the third finger 143 to apply a force towards the workpiece support to move the elongated workpiece until a determined extent.

The welding tool 150 may comprises a profilometer 171 to sense the profile of the portions of the elongated workpiece 200 and the panel 230 to be welded together. The profilometer 171 may be in data communication with the control unit 160. The control unit 160 may receive data from the profilometer 171 and obtain a representation of the profiles of the workpieces to be welded together. The control unit 160 may be configured to determine whether a predetermined weld path can be performed on the obtained profiles. The control unit 160 may be configured to adapt the weld path to the actual

According to some examples, the welding tool 150 may be attached to the rest of the end effector 120 between the slot 130 and the end effector proximal end. In the examples of Figures, the welding tool 150 comprises a welding torch. However, the welding tool 150 may comprise a device for implanting any other welding technique. The welding tool 150 is configured to weld the elongated workpiece 200 onto a panel 230 as illustrated in Figure 3. The robot end effector may comprise a bearing system to isolate to movement of the welding tool about the longitudinal axis 123 of the end effector from the rest of the end effector 120. The robot end effector 120 may be moved by the manipulator 110.

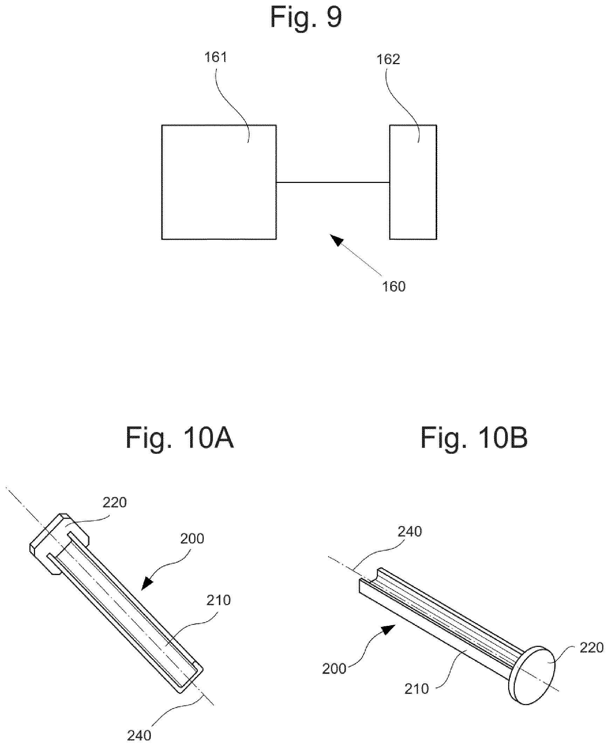

Figure 9 schematically illustrates a view of the control unit 160 of a system according to one example of the present disclosure. The control unit 160 may comprise a controller 161. Controller 161 may be a processor, a chip, a computational device, or processing resources that execute sequences of machine-readable instructions contained in a memory. Controller 161 performs operations on data. The memory may be a non-transitory machine-readable storage medium 162. As can be seen in Figure 9, the non-transitory machine-readable storage medium 162 is coupled to the controller 161. Examples of a non-transitory machine-readable storage medium may include a memory device, a floppy disk, a compact disk (CD), a digital versatile disk (DVD), a USB drive, a computer memory, a read-only memory, or other devices that may store computer code.

The machine-readable instructions may comprise a computer program(s) in the form of source code, object code, a code intermediate source, and object code such as in partially compiled form, or in any other form suitable for use in implementing the methods according to the present disclosure.

The control unit 160 may be configured to operate the manipulator 110 to position the robot end effector 120 close to the elongated workpiece in a storage. The elongated workpiece may be stored in an upright position. The robot end effector is positioned to substantially receive a portion of the elongated workpiece within the slot. Then the control unit can command the first and the second finger 141, 142 to hold the elongated workpiece sideways. The control unit may be also configured to operate the third finger 143 to align the longitudinal axis or length of the elongated workpiece 200 with the reference axis such as the longitudinal axis 123 of the end effector. The control unit 160 may be configured to operate the third finger 143 when the longitudinal axis of the elongated workpiece 200 and the longitudinal axis of the end effector 120 are misaligned, i.e. in the misaligned position. Misaligned may mean that an angle greater than 0° is defined between the longitudinal axis 240 of the elongated workpiece 200 and the longitudinal axis 123 of the end effector 120 about the workpiece rotation axis 144, when seen from the side of the end effector 120. The example illustrated in Figure 8A corresponds to an elongated workpiece 200 substantially misaligned with the robot end effector 200, while the example illustrated in Figure 8B corresponds to elongated workpiece 200 substantially aligned with the robot end effector 200.

Once the longitudinal axis 240 of the elongated workpiece 200 is substantially aligned with the longitudinal axis 123 of the end effector, the manipulator may displace the robot end effector to carry the elongated workpiece until the welding position onto the panel or any part of a bulkhead. The manipulator may exert pressure on the panel. The perpendicularity between the elongated workpiece and the panel may be determined by the control unit. The welding tool may perform the welding operation. The welding operation can be performed without tack welding.

Figures 10A - 10B schematically illustrate respective examples of elongated workpieces 200. In both cases, the elongated workpiece 200 comprises a stem 210 attached to a footing 220 at one end of the stem 210. In the example of Figure 10A, the stem 210 comprises a generally squared configuration. In the example of Figure 10B, the stem 210 comprises a generally circular configuration. In the attached Figures, the stem comprises a U-shaped cross-section. However, the stem 210 may comprise different shapes, e.g. a L-shaped and/or circular-shaped cross-section. The elongated workpiece 200 and the panel 230 may be made from a metallic material.

According to some examples, the elongated workpieces 200 may comprise supports to be installed are a structural reinforcement element for the assembly of different types of circuits (electrical, hydraulic, etc.). The elongated workpieces may be made of steel profiles.

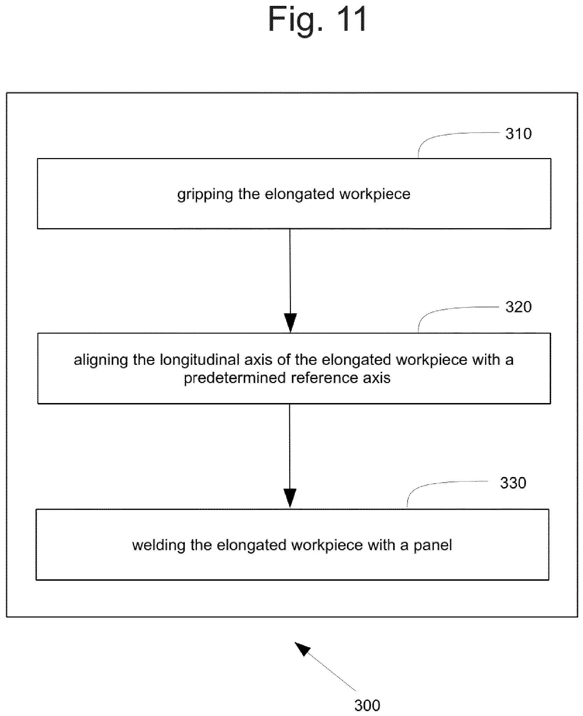

Figure 11 is a block diagram of a method 300 for gripping and welding an elongated workpiece using a robot end effector. The robot end effector comprises a gripping mechanism and a welding tool. In some examples, the robot end effector may correspond to a robot end effector 120 according to any of the examples described herein.

The method 300 comprises, at block 310, gripping or holding the elongated workpiece 200 at least at two opposite side gripping regions 181, 182 respectively positioned at each side of the longitudinal axis 123 of the robot end effector 120. The robot end effector 120 may be moved to receive the elongated workpiece 200. The first and the second fingers 141, 142 may be commanded to grip the workpiece 200 sideways. In some examples, the gripping the elongated workpiece may comprise receiving at least a portion of the elongated workpiece within the slot 130 of the robot end effector 120.

At block 320, aligning the longitudinal axis of the elongated workpiece with a predetermined reference axis, is represented. The predetermined reference axis may comprise the longitudinal axis of the robot end effector. Aligning the longitudinal axis of the elongated workpiece may comprise rotating the elongated workpiece with respect to the workpiece rotation axis 144 defined between the two side gripping regions 181, 182. The rotating the elongated workpiece may comprise pushing a tip of the elongated workpiece against the workpiece support arranged within the slot 130. The third finger 143 may be actuated to press or push the tip of the elongated workpiece 200 to cause the rotation. The elongated workpiece can be rotated when the longitudinal axis of the elongated workpiece and the predetermined reference axis are misaligned, or in a misaligned position relative to each other.

The method 300 further comprises welding the elongated workpiece with a panel by moving the welding tool about the longitudinal axis of the end effector, as represented at block 330. The elongated workpiece may be gripped while the elongated workpiece is welded with the panel. As the elongated workpiece is already aligned with the predetermined reference axis, the elongated workpiece may be accurately positioned on the panel by moving the robot end effector.

In some examples, before performing the welding operation, it can be checked or determined whether the elongated workpiece is generally perpendicular to the panel.

In a first example to determine the perpendicularity, the method 300 may comprise:
providing an industrial robot 100 comprising a robot end effector 120. The industrial robot 100 comprises a distance sensor and a control unit;
moving the robot end effector 120 about its longitudinal axis 123. The control unit may command this movement.
sensing, by the distance sensor, a distance between the elongated workpiece and the panel at different positions or points about the longitudinal axis of the robot end effector. A plurality of distance measurements can be obtained from different points about the longitudinal axis 123;
receiving, by the control unit 160, distance measurements. The distance measurements may comprise data related to the distance;
determining, by the control unit 160, a perpendicularity indicator by verifying whether the distance measurements satisfy a predetermined distance threshold. The perpendicularity indicator may indicate whether the longitudinal axis 240 of the workpiece is substantially perpendicular to the panel or not. In case the distance measurements do not satisfy the distance threshold, the control unit 160 may be configured to calculate correcting movements of the robot end effector to position the workpiece perpendicularly to the panel.

In a second example to determine the perpendicularity, the method 300 may comprise:
providing an industrial robot 100 comprising a robot end effector 120. The industrial robot 100 comprises a distance sensor and a control unit;
moving the robot end effector 120 about its longitudinal axis 123. The control unit may command this movement;
sensing, by the distance sensor, a distance between the elongated workpiece and the panel at different positions or points about the longitudinal axis of the robot end effector. A plurality of distance measurements can be obtained from different points about the longitudinal axis 123;
receiving, by the control unit 160, distance measurements;
determining, by the control unit 160, a perpendicularity indicator by verifying whether a difference between the highest value and the lowest value among the distance measurements satisfies a predetermined difference threshold.
satisfies a predetermined difference threshold. As above mentioned, the perpendicularity indicator may indicate whether the longitudinal axis 240 of the workpiece is substantially perpendicular to the panel or not. In case the difference does not satisfy the difference threshold, the control unit 160 may be configured to calculate correcting movements of the robot end effector to position the workpiece perpendicularly to the panel.

The first and the second examples for determining perpendicularity differ, inter alia, in the way that the distance data is processed. While the first example is based on comparing each measurement with a distance threshold, in the second example the highest and the lowest values of the measurements are compared with each other.

For reasons of completeness, various aspects of the present disclosure are set out in the following numbered clauses:
Clause 1. A robot end effector, comprising:
   an end effector distal end and an end effector proximal end at opposite sides along a longitudinal axis of the robot end effector;
   a welding tool configured to move about the longitudinal axis of the robot end effector;
   a slot configured to receive at least a portion of an elongated workpiece; the slot being defined along the longitudinal axis of the robot end effector;
   a workpiece support for supporting the portion of the elongated workpiece, wherein the workpiece support is arranged within the slot;
   a gripping mechanism configured to grip the elongated workpiece, the gripping mechanism comprising:
      - a first finger opposite to a second finger, wherein the first finger and the second finger are arranged at both sides of the longitudinal axis of the robot end effector to hold the elongated workpiece;
      - a third finger arranged between the end effector proximal end and the first and second fingers, wherein the third finger is configured to push the portion of the elongated workpiece against the workpiece support.
Clause 2. The robot end effector according to clause 1, comprising:
   a workpiece rotation axis defined from the first finger to the second finger, wherein the workpiece rotation axis is perpendicular to the longitudinal axis of the end effector,
   wherein the third finger is arranged in such a way that the elongated workpiece rotates about the workpiece rotation axis when a force is exerted by the third finger on the elongated workpiece placed in the slot.
Clause 3. The robot end effector according to any of clauses 1 - 2, wherein the first finger and the second finger are arranged at the end effector distal end.
Clause 4. The robot end effector according to any of clauses 1-3, wherein the first finger and the second finger are movable perpendicularly to the longitudinal axis of the robot end effector, so that the first finger and the second finger are configured to grip the elongated workpiece sideways.
Clause 5. The robot end effector according to any of clauses 1-4, wherein the gripping mechanism comprises a base configured to link the first finger and the second finger.
Clause 6. The robot end effector according to clause 5, wherein a gap or clamping region is defined between the base, the first finger, and the second finger in an open position.
Clause 7. The robot end effector according to clause 6, wherein the base, the first finger, and the second finger are arranged so that the gap or clamping region is a continuation of the slot along the longitudinal axis of the robot end effector.
Clause 8. The robot end effector according to any of clauses 1-7, wherein a receiving space or region is defined within the slot to receive the portion of the elongated workpiece.
Clause 9. The robot end effector according to any of clauses 1 - 8, wherein the slot comprises a slot distal end and a slot proximal end.
Clause 10. The robot end effector according to clause 9, wherein the first finger and the second finger are arranged adjacent to the slot distal end.
Clause 11. The robot end effector according to any of clauses 9 - 10, wherein the third finger is arranged at the slot proximal end.
Clause 12. The robot end effector according to any of clauses 1 - 11, wherein the longitudinal axis of the end effector is parallel to the length of the slot.
Clause 13. The robot end effector according to any of clauses 1 - 12, wherein the welding tool is orbitally attached to the rest of the end effector.
Clause 14. The robot end effector according to any of clauses 1 - 13, wherein the welding tool is attached to the rest of the end effector between the slot and the end effector proximal end.
Clause 15. The robot end effector according to any of clauses 1 - 14, wherein the welding tool is configured to weld the elongated workpiece onto a panel.
Clause 16. The robot end effector according to any of clauses 1 - 15, wherein the welding tool comprises a welding torch.
Clause 17. The robot end effector according to clause 2, wherein the first finger and the second finger are movable along the workpiece rotation axis.
Clause 18. The robot end effector according to clause 2, wherein the third finger is movable about a third finger rotation axis parallel to the workpiece rotation axis.
Clause 19. The robot end effector according to any of clauses 1 - 18, wherein the third finger is configured to be aligned with the length of the slot in a gripping condition.
Clause 20. An industrial robot, comprising:
   a manipulator to releasably attach the robot end effector according to any of clauses 1-19;
   a control unit configured to control the operation of the industrial robot;
   an end effector driving system configured to move the robot end effector about the longitudinal axis of the robot end effector;
   a distance sensor configured to sense distances between the elongated workpiece and a panel at positions about the longitudinal axis of the robot end effector, wherein the distance sensor is in data communication with the control unit;
   wherein the control unit is configured to determine a perpendicularity indicator of the longitudinal axis of the elongated workpiece relative to the panel, the perpendicularity indicator being obtained based on received distance measurements.
Clause 21. The industrial robot according to clause 20, wherein the control unit is configured to determine the perpendicularity indicator by verifying whether the distance measurements satisfy a predetermined distance threshold.
Clause 22. The industrial robot according to clause 20, wherein the control unit is configured to determine the perpendicularity indicator by verifying whether a difference between the highest value and the lowest value among the distance measurements satisfies a predetermined difference threshold.
Clause 23. The industrial robot according to any of clauses 20 - 22, comprising:
   a position sensor configured to determine the position of the elongated workpiece relative to a predetermined reference axis of the robot end effector, wherein the position sensor is in data communication with the control unit;
   wherein the control unit is configured to operate the third finger to align the longitudinal axis of the elongated workpiece with the predetermined reference axis.
Clause 24. The industrial robot according to clause 23, wherein the position of the elongated workpiece comprises the position of the longitudinal axis of the elongated workpiece.
Clause 25. The industrial robot according to any of clauses 23 - 24, wherein the control unit is configured to operate the third finger when the longitudinal axis of the elongated workpiece and the predetermined reference axis are misaligned.
Clause 26. The industrial robot according to any of clauses 20 - 25, comprising:
   a profilometer configured to sense the profile of the portions of the elongated workpiece and the panel to be welded together, wherein the profilometer is in data communication with the control unit;
   wherein the control unit is configured to determine a weld path based on the received profile data.
Clause 27. The industrial robot according to any of clauses 20 - 26, wherein the elongated workpiece comprises a stem attached to a footing at one end of the stem.
Clause 28. The industrial robot according to any of clauses 20 - 27, wherein the stem comprises a generally squared or circular configuration.
Clause 29. The industrial robot according to any of clauses 20 - 28, wherein the stem comprises at least one of an L-shaped, a U-shaped, and a circular-shaped cross-section.
Clause 30. A method for gripping and welding an elongated workpiece using a robot end effector, wherein the robot end effector comprises a gripping mechanism and a welding tool, the method comprises:
   gripping or holding the elongated workpiece at least at two opposite gripping regions respectively positioned at each side of the longitudinal axis of the robot end effector;
   aligning the longitudinal axis of the elongated workpiece with a predetermined reference axis of the robot end effector;
   welding the elongated workpiece with a panel by moving the welding tool about the longitudinal axis of the end effector.
Clause 31. The method according to clause 30, wherein gripping the elongated workpiece comprises receiving at least a portion of the elongated workpiece within a slot of the robot end effector.
Clause 32. The method according to any of clauses 30 - 31, wherein aligning the longitudinal axis of the elongated workpiece comprises rotating the elongated workpiece with respect to a workpiece rotation axis defined between the two side gripping regions, wherein the workpiece rotation axis is perpendicular to the longitudinal axis of the end effector.
Clause 33. The method according to clauses 31 and 32, wherein rotating the elongated workpiece comprises pushing a tip of the elongated workpiece against a workpiece support arranged within the slot.
Clause 34. The method according to any of clauses 30 - 33, comprising:
   gripping the elongated workpiece while the elongated workpiece is welded with the panel.
Clause 35. The method according to clause 32, wherein the elongated workpiece is rotated when the longitudinal axis of the elongated workpiece and the predetermined reference axis are misaligned.
Clause 36. The method according to any of clauses 30 - 35, wherein the predetermined reference axis comprises the longitudinal axis of the robot end effector.
Clause 37. The method according to any of clauses 30 - 36, comprising:
   providing an industrial robot comprising the robot end effector, a distance sensor, and a control unit;
   moving the robot end effector about its longitudinal axis;
   sensing a distance between the elongated workpiece and the panel at different positions or points about the longitudinal axis of the robot end effector;
   receiving distance measurements;
   determining a perpendicularity indicator by verifying whether the distance measurements satisfy a predetermined distance threshold.
Clause 38. The method according to any of clauses 30 - 37, comprising:
   providing an industrial robot comprising the robot end effector, a distance sensor, and a control unit;
   moving the robot end effector about its longitudinal axis;
   sensing a distance between the elongated workpiece and the panel at different positions or points about the longitudinal axis of the robot end effector;
   receiving distance measurements;
   determining a perpendicularity indicator by verifying whether a difference between the highest value and the lowest value among the distance measurements satisfies a predetermined difference threshold.

Although only a number of examples have been disclosed herein, other alternatives, modifications, uses, and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A robot end effector, comprising:
an end effector distal end and an end effector proximal end at opposite sides along a longitudinal axis of the robot end effector;
a welding tool configured to move about the longitudinal axis of the robot end effector;
a slot configured to receive at least a portion of an elongated workpiece; the slot being defined along the longitudinal axis of the robot end effector;
a workpiece support for supporting the portion of the elongated workpiece, wherein the workpiece support is arranged within the slot;
a gripping mechanism configured to grip the elongated workpiece, the gripping mechanism comprising:
- a first finger opposite to a second finger, wherein the first finger and the second finger are arranged at both sides of the longitudinal axis of the robot end effector to hold the elongated workpiece;
- a third finger arranged between the end effector proximal end and the first and second fingers, wherein the third finger is configured to push the portion of the elongated workpiece against the workpiece support.

2. The robot end effector according to claim 1, comprising:
a workpiece rotation axis defined from the first finger to the second finger, wherein the workpiece rotation axis is perpendicular to the longitudinal axis of the end effector,
wherein the third finger is arranged in such a way that the elongated workpiece rotates about the workpiece rotation axis when a force is exerted by the third finger on the elongated workpiece placed in the slot.

3. The robot end effector according to any of claims 1 - 2, wherein the first finger and the second finger are arranged at the end effector distal end.

4. The robot end effector according to any of claims 1-3, wherein the first finger and the second finger are movable perpendicularly to the longitudinal axis of the robot end effector, so that the first finger and the second finger are configured to grip the elongated workpiece sideways.

5. The robot end effector according to any of claims 1 - 4, wherein the slot comprises a slot distal end and a slot proximal end.

6. The robot end effector according to claim 5, wherein the first finger and the second finger are arranged adjacent to the slot distal end.

7. The robot end effector according to any of claims 5 - 6, wherein the third finger is arranged at the slot proximal end.

8. The robot end effector according to any of claims 1 - 7, wherein the longitudinal axis of the end effector is parallel to the length of the slot.

9. The robot end effector according to claim 2, wherein the third finger is movable about a third finger rotation axis parallel to the workpiece rotation axis.

10. An industrial robot, comprising:
a manipulator to releasably attach the robot end effector according to any of claims 1 - 9;
a control unit configured to control the operation of the industrial robot;
an end effector driving system configured to move the robot end effector about the longitudinal axis of the robot end effector;
a distance sensor configured to sense distances between the elongated workpiece and a panel at positions about the longitudinal axis of the robot end effector, wherein the distance sensor is in data communication with the control unit;
wherein the control unit is configured to determine a perpendicularity indicator of the longitudinal axis of the elongated workpiece relative to the panel, the perpendicularity indicator being obtained based on received distance measurements.

11. The industrial robot according to claim 10, comprising:
a position sensor configured to determine the position of the elongated workpiece relative to a predetermined reference axis of the robot end effector, wherein the position sensor is in data communication with the control unit;
wherein the control unit is configured to operate the third finger to align the longitudinal axis of the elongated workpiece with the predetermined reference axis.

12. The industrial robot according to any of claims 10 - 11, wherein the control unit is configured to operate the third finger when the longitudinal axis of the elongated workpiece and the predetermined reference axis are misaligned.

13. A method for gripping and welding an elongated workpiece using a robot end effector, wherein the robot end effector comprises a gripping mechanism and a welding tool, the method comprises:
gripping or holding the elongated workpiece at least at two opposite gripping regions respectively positioned at each side of the longitudinal axis of the robot end effector;
aligning the longitudinal axis of the elongated workpiece with a predetermined reference axis of the robot end effector;
welding the elongated workpiece with a panel by moving the welding tool about the longitudinal axis of the end effector.

14. The method according to claim 13, wherein gripping the elongated workpiece comprises receiving at least a portion of the elongated workpiece within a slot of the robot end effector.

15. The method according to any of claims 13 - 14, comprising:
gripping the elongated workpiece while the elongated workpiece is welded with the panel.
